(19) **Europäisches Patentamt / European Patent Office / Office européen des brevets**

(11) **EP 4 394 391 B1**

(12) **FASCICULE DE BREVET EUROPEEN**

(45) Date de publication et mention
de la délivrance du brevet:
**19.02.2025 Bulletin 2025/08**

(21) Numéro de dépôt: **23214424.6**

(22) Date de dépôt: **05.12.2023**

(51) Classification Internationale des Brevets (IPC):
**G01P 15/097** (2006.01)   **G01P 15/08** (2006.01)
**G01P 5/10** (2006.01)   **G01P 21/00** (2006.01)

(52) Classification Coopérative des Brevets (CPC):
**G01P 15/097; G01P 5/10; G01P 21/00;**
G01P 2015/0814

(54) **ENSEMBLE CAPTEUR DE MESURE D'ACCÉLÉRATION, COMPRENANT UN SOUS-ENSEMBLE ACCÉLÉROMÈTRE À TROIS AXES DE MESURES, À MASSE SISMIQUE À MOUVEMENT RECTILIGNE SELON UN AXE PRINCIPAL A, MONTÉ DANS UN BOÎTIER, CONFIGURÉ POUR DÉTERMINER UNE ACCÉLÉRATION SELON UN AXE DE MESURE Y**

BESCHLEUNIGUNGSMESSSENSORANORDNUNG MIT EINER IN EINEM GEHÄUSE ANGEORDNETEN, IN EINER ACHSE ANGEORDNETEN DREIMESSACHSEN-BESCHLEUNIGUNGSMESSEINHEIT MIT LINEAR BEWEGLICHER SEISMISCHER MASSE

CASE MOUNTED SEISMIC MASS THREE-AXIS ACCELEROMETER SUB-ASSEMBLY CONFIGURED TO DETERMINE ACCELERATION ACCORDING TO Y-AXIS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **29.12.2022 FR 2214621**

(43) Date de publication de la demande:
**03.07.2024 Bulletin 2024/27**

(73) Titulaire: **THALES**
**92190 Meudon (FR)**

(72) Inventeurs:
- **QUER, Régis**
  **26027 VALENCE Cedex (FR)**
- **LEFORT, Olivier**
  **26027 VALENCE Cedex (FR)**
- **CHEVALIER, Jean-René**
  **86101 CHATELLERAULT (FR)**
- **JAUD, Sébastien**
  **26027 VALENCE Cedex (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-B1- 1 570 275**

- DE FREITAS J M ET AL: "Measurement of sensor axis misalignment in fibre-optic accelerometersThis paper was presented at the 13th International Conference on Sensors and Their Applications, held in Chatham, Kent, on 6-7 September 2005.; Measurement of sensor axis misalignment in fibre-optic accelerometers", MEASUREMENT SCIENCE AND TECHNOLOGY, IOP, BRISTOL, GB, vol. 17, no. 7, July 2006 (2006-07-01), pages 1819 - 1825, XP020103598, ISSN: 0957-0233, DOI: 10.1088/0957-0233/17/7/021
- HILLER TOBIAS ET AL: "Analysis and Compensation of Cross-Axis Sensitivity in Low-Cost MEMS Inertial Sensors", 2021 IEEE INTERNATIONAL SYMPOSIUM ON INERTIAL SENSORS AND SYSTEMS (INERTIAL), IEEE, 22 March 2021 (2021-03-22), pages 1 - 4, XP033917023, DOI: 10.1109/INERTIAL51137.2021.9430454

EP 4 394 391 B1

**Description**

L'invention porte sur ensemble capteur de mesure d'accélération, comprenant un accéléromètre à trois axes de mesures, à masse sismique à mouvement rectiligne selon un axe principal A, monté dans un boîtier muni d'éléments de fixation, configuré pour déterminer une accélération selon un axe de mesure Y.

Le domaine d'application de la présente invention couvre l'ensemble des applications nécessitant un accéléromètre peu sensible aux accélérations transverses, i.e. dans les deux axes orthogonaux à son axe sensible.

Un tel accéléromètre est décrit dans le document EP 1 570 275 B1, dans lequel sont présentés plusieurs modes de réalisation, d'un tel accéléromètre muni d'une masse sismique guidée par des bras ou poutres de guidage.

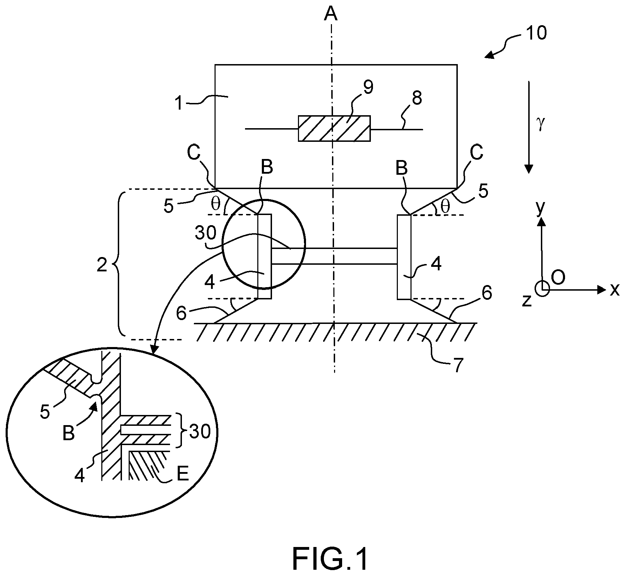

La [Fig.1] représente un exemple de réalisation d'un tel accéléromètre, dans laquelle la masse sismique est située d'un côté des moyens d'amplification, les paires de bras étant disposées en papillon, de manière non limitative.

L'exemple de résonateur pris comprend deux poutres formant diapason, que l'on fait vibrer en opposition de phase au moyen de deux électrodes. C'est cette configuration en diapason qui est représentée sur la [Fig.1]. On pourrait tout aussi bien utiliser comme résonateur une poutre vibrante ou plusieurs poutres vibrantes ou une barre de torsion.

L'accéléromètre à poutres vibrantes décrit comporte de préférence deux cellules de mesures qui peuvent être réalisées par usinage d'un substrat de silicium sur isolant (SOI) ou de quartz ou d'un autre matériau, mais d'autres méthodes sont également possibles.

Un substrat de silicium sur isolant est constitué d'un substrat monolithique fixe de silicium de quelques centaines de micromètres d'épaisseur (450 $\mu$m par exemple) constituant la base de l'accéléromètre, qui porte sur sa face avant une fine couche d'oxyde de silicium de quelques micromètres d'épaisseur (2 $\mu$m par exemple) elle-même recouverte d'une couche de silicium monocristallin de quelques dizaines de micromètres d'épaisseur (60 $\mu$m par exemple). L'usinage consiste à attaquer le silicium monocristallin par sa face avant jusqu'à atteindre la couche d'oxyde, avec un produit de gravure sélectif qui attaque le silicium sans attaquer significativement l'oxyde. On arrête la gravure lorsque la couche d'oxyde est mise à nu. Cette couche d'oxyde peut elle-même être enlevée par attaque sélective avec un autre produit de manière à ne conserver que la couche superficielle de silicium. Celle-ci peut ainsi être gravée selon les motifs de surface désirés au moyen de techniques de photogravure ou d'une autre technique en usage en microélectronique pour obtenir ainsi la structure plane mobile désirée.

Le repère O,x,y,z représenté sur la [Fig.1], est celui dans lequel le plan de la [Fig.1] est le plan O,x,y, l'axe Oz représentant la direction perpendiculaire à ce plan.

La structure plane mobile 10 d'une cellule de mesure de l'accéléromètre, schématiquement représentée sur la [Fig.1], comporte une masse sismique 1 mobile susceptible de se déplacer en translation selon l'axe sensible A de l'accéléromètre parallèle à l'axe Oy, qui est l'axe de l'accélération $\gamma$ à mesurer, et des moyens d'amplification 2 de la force générant cette translation, mesurée au moyen de deux poutres vibrantes 30 placées selon un axe Ox perpendiculaire à l'axe Oy, qui subissent une traction ou une compression selon le sens de l'accélération. Les poutres sont disposées symétriquement par rapport à un axe de symétrie A de la structure, cet axe de symétrie étant parallèle à l'axe Oy en sortie de production de la puce et passant par le centre de gravité de la masse : la géométrie de la masse sismique n'intervient alors pas sur les performances de l'accéléromètre.

Les poutres vibrantes 30 sont encastrées à chaque extrémité dans une terminaison 4 rigide. Chacune de ces terminaisons 4 comporte une paire de bras micro-usinés. Les deux paires sont symétriques par rapport à l'axe de symétrie A. Un premier bras 5 micro-usiné relie la terminaison 4 à la masse sismique 1. Pour que la terminaison 4 ne flotte pas par rapport à la base, c'est-à-dire par rapport au substrat monolithique fixe de silicium, un deuxième bras 6 micro-usiné, symétrique du premier bras par rapport à l'axe de la poutre, relie la terminaison 4 à un pied d'ancrage 7 fixé à la base. Ces bras 5 et 6 sont respectivement reliés à la masse sismique1, à la terminaison 4 et au pied d'ancrage 7, par des points d'attache. L'épaisseur d'un bras 5 ou 6 peut varier sur sa longueur.

On a également schématiquement représenté sur la [Fig.1] un zoom sur une partie des moyens d'amplification. Le premier bras 5 est articulé sur la terminaison 4 par un point d'attache B. On a également représenté une partie d'électrode E. Les deux poutres vibrantes 30 sont encastrées dans la terminaison 4 dans la mesure où elles sont formées par gravure par exemple de la même couche de matière. Les hachures représentent la matière, du silicium monocristallin par exemple dans le cas d'une cellule réalisé par usinage d'un SOI. Comme indiqué précédemment, les motifs de surface tels que les bras 5, point d'attache B, terminaison 4, poutres 30 et électrode E ont été obtenus par gravure du silicium monocristallin, puis par attaque de la couche d'oxyde.

L'angle $\theta$ formé par l'axe Ox et la ligne joignant les points d'attache B et C du premier bras 5 qui, en raison de la symétrie des bras 5 et 6 par rapport à l'axe reliant les terminaisons par leur milieu, est symétrique de l'angle formé par l'axe Ox et la ligne joignant les points d'attache du deuxième bras 6. Cet angle $\theta$ est suffisamment faible pour que la force exercée en traction ou en compression sur la poutre 30 soit supérieure à la force d'accélération exercée sur la masse sismique 1.

Ces moyens d'amplification 2 permettent en outre de libérer de l'espace autour des poutres vibrantes 30, notamment pour placer les électrodes dans le cas d'une excitation électrostatique. On rappelle que les poutres vibrantes sont mises en vibration à leur fréquence de résonance à l'aide d'électrodes disposées en regard de ces poutres, ou directement sur les poutres, suivant qu'il s'agit d'une excitation électrostatique ou piézo-électrique.

La masse sismique 1 est intrinsèquement guidée en translation selon l'axe Oy de par la symétrie de la structure. Pour ne conserver que ce degré de liberté selon Oy, on peut éventuellement raidir encore la structure selon Ox et Oz via des bras de guidage 8 orientés suivant l'axe Ox, dont une extrémité est fixée à la masse sismique 1 et l'autre à une partie 9 fixée à la base.

La force générant la translation de la masse sismique 1 selon l'axe Oy est transmise par les premiers bras 5 à chacune des terminaisons 4 qui, selon le sens de la translation, s'écartent ou se rapprochent l'une de l'autre suivant l'axe Ox, provoquant ainsi une traction ou une compression des poutres vibrantes 30. La structure 10 étant symétrique par rapport à l'axe A et en ce qui concerne les bras par rapport à l'axe des poutres, les déplacements de la masse sismique 1, des terminaisons 4 et de la poutre 30 sont parfaitement axiaux. Ainsi, lorsque les poutres 30 forment un diapason, les tractions ou compression s'exercent de la même façon sur chacune des poutres du diapason.

Les performances de cette structure, c'est-à-dire le coefficient d'amplification obtenu est simplement déterminé par cet angle $\theta$.

Lorsque la masse sismique 1 est soumise à une force d'inertie $M.\gamma$ selon Oy, cette force est amplifiée et transmise par les moyens d'amplification 2 aux poutres vibrantes 30. Le rapport d'amplification est sensiblement égal à $1/tg\ \theta$.

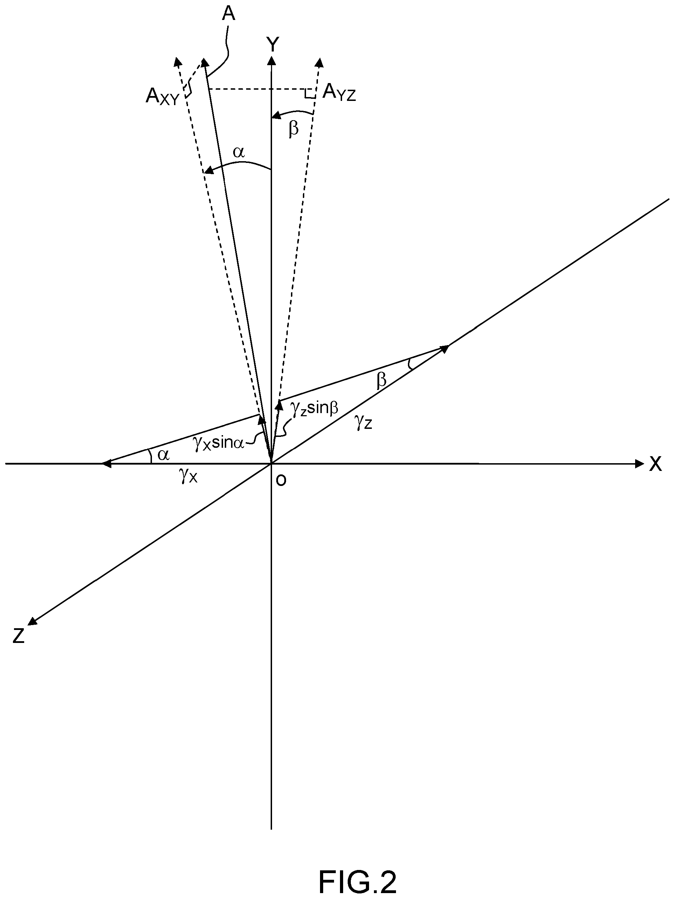

La [Fig.1] représente un mode de réalisation préférentiel, dans lequel la masse sismique 1 entoure les moyens d'amplification 2 à poutres vibrantes comme représenté figures 2 à 5 du document EP 1 570 275 B1. Une telle configuration permet d'obtenir une structure plus compacte.

Les bras 5, 6 peuvent être disposés selon différentes variantes. Ils peuvent être disposés en papillon, (ou en X) comme représenté figures 1, 2 et 4 du document EP 1 570 275 B1, cette disposition signifiant que le premier point d'attache B du premier bras 5 à la terminaison 4 est situé plus près de l'axe de symétrie A que son deuxième point d'attache C à la masse sismique 1. Dans ce cas, une translation de la masse sismique 1 vers les poutres 30 provoque alors une compression des poutres.

Comme mentionné au paragraphe [0011] du document EP 1 570 275 B1, en raison de la symétrie de cette structure, les déplacements de la masse sismique, des terminaisons d'encastrement et du résonateur sont parfaitement axiaux, en d'autres termes, il y a un déplacement axial selon un seul axe, en l'espèce l'axe A parallèle à Oy de la [Fig.1], mais pas de sensibilité selon les deux autres axes transverses, en l'espèce les axes Ox et Oz de la [Fig.1]. Cette propriété est fondamentale dans le cadre de cette invention car elle participe à la détection de défauts de montage.

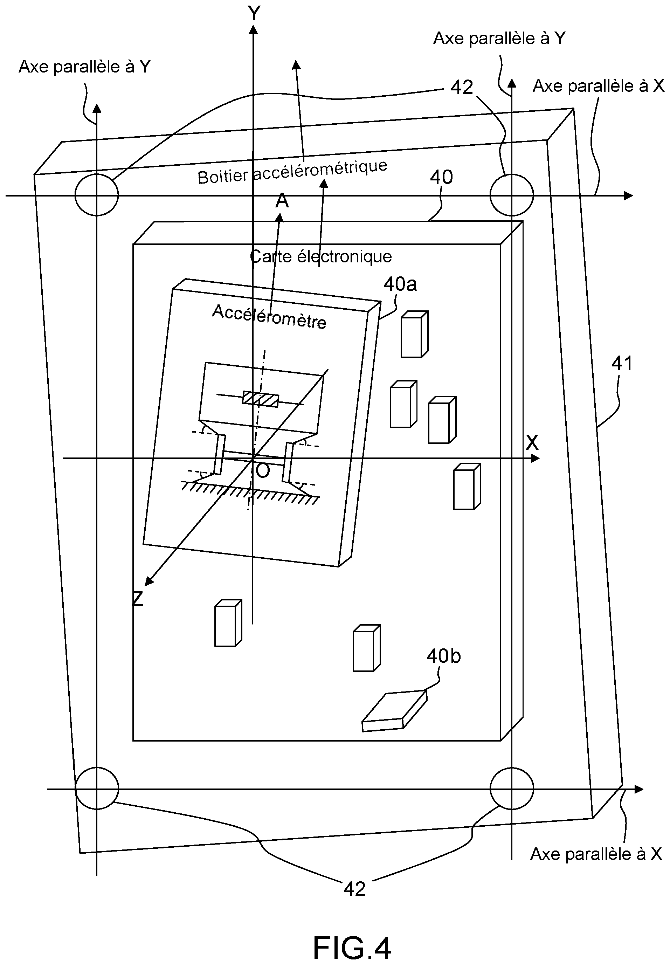

L'axe de mesure OY d'un ensemble capteur de mesure d'accélération est toujours donné par rapport à une référence, généralement son mode de fixation, un ou plusieurs pions de centrage, un plan ou surface de référence ... comme illustré sur la [Fig.4]

L'assemblage ou le mode de réalisation de l'accéléromètre conduit toujours à un certain niveau d'erreur de calage de l'axe sensible Oy par rapport à l'axe de mesure OY à utiliser.

Comme illustré sur la [Fig.2] l'axe sensible ou principal A, parallèle à l'axe Oy est vertical mais décalé de l'axe de mesure OY d'un angle $\alpha$ dans le plan XOY, et d'un angle $\beta$ dans le plan YOZ, après des projections orthogonales AXY, AYZ respectives sur ces plans de l'axe sensible A.

Les angles sont des angles orientés, mesurés soit dans le sens horaire, soit dans le sens trigonométrique.

Pour chacun des axes transverses, grâce à l'insensibilité transverse des capteurs tels que décrits dans le document EP 1 570 275 B1, l'accélération fournie en sortie du capteur est mathématiquement entachée d'une erreur uniquement due au mésalignement lors du montage en cas d'accélération transverse.

Cette erreur est donnée par la relation suivante :

$$\text{Erreur} = \gamma_x.\sin(\alpha) - \gamma_Z.\sin(\beta)$$

dans laquelle :

$\gamma_x$ représente l'accélération selon l'axe transverse X, en m.s$^{-2}$, et
$\gamma_Z$ représente l'accélération selon l'axe transverse Z, en m.s$^{-2}$.

En raison de l'insensibilité transverse de l'accéléromètre principal, dans l'équation, on ne retrouve pas de composante d'erreur transverse intrinsèque aux défauts de l'accéléromètre principal comme c'est normalement le cas avec des technologies d'accéléromètres différentes des accéléromètres selon le document EP 1 570 275 B1.

Cette erreur, physiquement inévitable, s'avère rapidement rédhibitoire pour une application nécessitant une faible erreur de mesure sous accélération transverse, typiquement cette erreur doit être inférieure à 1mg, soit 10$^{-2}$ m/s$^2$ pour des applications aéronautiques civiles certifiées.

Le g est une unité d'accélération correspondant approximativement à l'accélération de la pesanteur à la surface de la Terre. Sa valeur conventionnelle, définie par la troisième conférence générale des poids et mesures de 1911, est de $9,806\,65\ \mathrm{m.s}^{-2}$

La présente problématique concerne notamment les boîtiers capteurs pour commandes de vol. Une telle application nécessite une précision de calage de l'axe sensible inférieure à 3mrad, i.e. de l'axe sensible principal A par rapport à l'axe de mesure OY.

Ce faible niveau d'erreur de calage d'axe, lorsque l'accéléromètre est d'une technologie présentant une sensibilité transverse non nulle, ne s'obtient pas naturellement à l'issue du procédé de réalisation et d'assemblage, quelles que soient les précautions d'assemblage, et nécessite un réglage manuel par des opérateurs. Cette opération manuelle s'avère coûteuse en regard du coût de fabrication du produit.

Plus généralement, la tenue du calage de l'axe principal sensible A, inférieur à une ou plusieurs dizaines de mrad, est compliquée à obtenir sans opérations de réglages mécaniques, de coûts élevés.

Ce problème est généralement traité par :

- de fortes contraintes d'assemblage/réalisation pour garantir la tenue du calage d'axe ;
- du tri et du rebut ;
- du réglage mécanique au montage du capteur, pour obtenir un alignement précis de l'axe principal sensible du capteur selon l'axe de mesure du produit ; ou
- du surfaçage d'une face de référence, comme par ponçage d'une partie de l'enveloppe du capteur, pour compenser l'erreur.

Par exemple, pour un accéléromètre basé sur un système pendulaire, l'opération de réglage nécessite un dispositif de réglage mécanique, avec rotation autour des deux axes transverses (système de rotule par exemple), avec une amplitude dépendante du désalignement initial lors de l'assemblage.

Un tel dispositif est coûteux (pièces mobiles, amplitude de réglage et dispositif de blocage une fois le réglage réalisé) et nécessite une opération spécifique de réglage/blocage avant la calibration du produit.

Les solutions de l'état de l'art ont un coût élevé.

Les articles "Measurement of sensor axis misalignment in fibre-optic accelerometers", de Freitas J.M. et al, Measurement Science and Technology, IOP, Bristol, GB, vol. 17, no. 7, juillet 2006, pages 1819-1825, et "Analysis and Compensation of Cross-Axis Sensitivity in Low-Cost MEMS Inertial Sensors", Hiller T. et al, 2021 IEEE International Symposium on inertial sensors and systems, 22 mars 2021, pages 1-4, décrivent d'autres ensembles capteurs connus de mesure d'accélération.

Un but de l'invention est de pallier les problèmes précédemment cités, et notamment de rester dans un budget ou taux d'erreur sous accélération transverse inférieur à 1 mg' sans pour autant respecter le calage d'axe que nécessiterait géométriquement cette contrainte.

Il est proposé, selon un aspect de l'invention, un ensemble capteur de mesure d'accélération comprenant un sous-ensemble accéléromètre à trois axes de mesures, monté dans un boîtier muni d'éléments de fixation, configuré pour déterminer une accélération selon un axe de mesure OY, comprenant :

- un accéléromètre principal mono-axe à masse sismique à mouvement rectiligne selon un axe sensible principal A, insensible aux accélérations transverses, réalisant une mesure d'accélération selon l'axe sensible principal A désaligné de l'axe de mesure OY d'au maximum 50 mrad,
- un accéléromètre secondaire à au moins deux axes de mesure réalisant des mesures respectivement selon deux axes X et Z formant avec l'axe de mesure OY un trièdre orthonormé direct (O, X, Y, Z), la précision de mesure de l'accéléromètre biaxe selon chacun de ses axes étant au moins dix fois moindre que la précision de mesure de l'accéléromètre principal mono-axe, et
- une unité de calcul électronique configurée pour calculer et délivrer en sortie une accélération S, compensée au moyen de la relation suivante :

$$S = S_{\mathrm{prA}} - \mu_{\mathrm{CalZ}} \cdot S_{\mathrm{secX}} + \mu_{\mathrm{CalX}} \cdot S_{\mathrm{secZ}}$$

dans laquelle :

- $S_{\mathrm{prA}}$ représente la mesure d'accélération selon l'axe sensible principal A ;
- $\mu_{\mathrm{CalX}}$, $\mu_{\mathrm{CalZ}}$ représentent les paramètres de compensation des calages respectivement d'axes X, Z de l'ensemble capteur, adimensionnels, mesurés après l'assemblage de l'ensemble capteur ; et
- $S_{\mathrm{secX}}$, $S_{\mathrm{secZ}}$ représentent l'accélération de compensation respectivement selon l'axe transverse X et selon l'axe transverse Z.

Selon un mode de réalisation, l'unité de commande électronique comprend un microcontrôleur ou un processeur de traitement numérique de signal (ou DSP pour acronyme de " Digital Signal Processor " en langue anglaise).

Dans un mode de réalisation, l'unité de commande électronique comprend un circuit intégré programmable FPGA.

Selon un mode de réalisation, l'accéléromètre biaxe est de classe 20 mg.

Selon un mode de réalisation, l'accéléromètre principal est de la classe 1mg.

Dans un mode de réalisation, l'accéléromètre biaxe est désaligné d'au maximum 50 mrad par rapport aux axes X et/ou Z.

L'invention sera mieux comprise à l'étude de quelques modes de réalisation décrits à titre d'exemples nullement limitatifs et illustrés par les dessins annexés sur lesquels :

- la [Fig.1] illustre schématiquement un accéléromètre à un axe de mesure à masse sismique (1) à mouvement rectiligne selon un axe principal, selon l'état de la technique ;
- la [Fig.2] illustre schématiquement les axes d'un ensemble capteur de mesure d'accélération configuré pour déterminer une accélération selon un axe principal, selon un aspect de l'invention ;
- la [Fig.3] illustre schématiquement un ensemble capteur selon un aspect de l'invention ; et
- la [Fig.4] illustre schématiquement un ensemble capteur selon un aspect de l'invention monté dans un boîtier avec un écart angulaire de l'axe principal par rapport à un axe souhaité.

La [Fig.2] représente les axes d'un ensemble capteur de mesure d'accélération configuré pour déterminer une accélération selon un axe principal A.

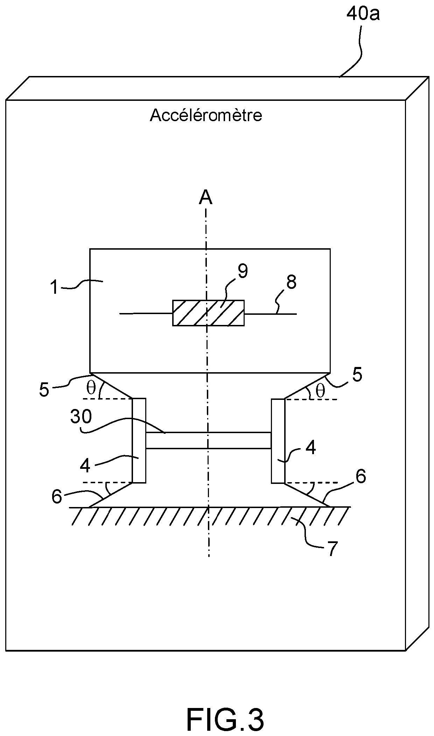

La [Fig.3] représente un ensemble capteur selon un aspect de l'invention.

Comme représenté sur la [Fig.4], l'ensemble capteur comprend un accéléromètre principal 40a mono-axe à hautes performances à masse sismique 1 à mouvement rectiligne selon un axe principal A, monté dans un boîtier 41 muni d'éléments de fixation 42 constituant les points de référence des axes XYZ, et réalisant une mesure d'accélération selon l'axe sensible principal A désaligné de l'axe de mesure Y d'au maximum 50 mrad, et un accéléromètre 40b réalisant des mesures respectivement selon deux axes quasi-alignés avec les axes X et Z, les axes X et Z formant avec l'axe de référence Y un trièdre orthonormé direct (O, X, Y, Z).

Sur cet exemple, quatre éléments de fixations 42 ont été représentés, alignés deux à deux horizontalement selon des axes parallèles à l'axe X, et alignés deux à deux verticalement selon des axes parallèles à l'axe Y. Cette disposition facilite le montage.

On entend par hautes performances la classe 1 mg.

On entend par quasi-alignés des axes désalignés d'au maximum 50 mrad par rapport aux axes X et/ou Z.

La précision de mesure de l'accéléromètre biaxe selon chacun de ses axes est au moins dix fois moindre que la précision de mesure de l'accéléromètre mono-axe.

- L'ensemble capteur comprend également une unité de calcul électronique configurée pour calculer une accélération S compensée au moyen de la relation suivante :

$$S = S_{prA} - \mu_{CalZ} \cdot S_{secX} + \mu_{CalX} \cdot S_{secZ}$$

dans laquelle :

- $S_{prA}$ représente la mesure d'accélération selon l'axe principal A ;
- $\mu_{CalX}$, $\mu_{CalZ}$ représentent les paramètres de compensation des calages respectivement d'axes X, Z du capteur, adimensionnels, mesurés après l'assemblage du capteur ; et

$S_{secX}$, $S_{secZ}$ représentent l'accélération de compensation respectivement placée selon l'axe transverse X et selon l'axe transverse Z.

Cette équation se trouve simplifiée par rapport à celle connue de l'homme de l'art du fait de l'insensibilité aux accélérations transverses de l'accéléromètre principal.

La présente invention permet de rester dans un budget ou taux d'erreur souhaité selon l'application prévue, en présence d'accélération transverse, sans pour autant respecter le calage d'axe que nécessiterait géométriquement cette contrainte.

A ces fins, le capteur de mesure d'accélération intègre, outre le capteur mono-axe sensible uniquement selon l'axe principal A, nécessaire pour mesurer l'accélération sur l'axe de mesure souhaité Y, un accéléromètre secondaire de moindre performance, a minima biaxe, assemblé de manière à ce que les axes secondaires X et Z forment un trièdre orthonormé avec l'axe sensible Y du capteur principal mono-axe.

L'assemblage du capteur est alors réalisé sans opération spécifique de réglage des calages d'axes, contrairement à ce qui est connu de l'état de l'art et qui est coûteux.

Les erreurs de calage d'axes sont mesurées lors d'une calibration standard en usine réalisée lors de la fabrication du capteur selon des méthodes connues de l'état de l'art.

En fonctionnement, un ensemble capteur selon un aspect de l'invention permet d'effectuer une compensation de l'effet des accélérations transverses par calcul (composant numérique de type microcontrôleur, processeur de traitement numérique de signal, ou FPGA) ou de manière analogique.

Les axes de référence souhaités du capteur sont notés X, Z (transverses secondaires) et Y (mesure).

L'intérêt est de permettre l'utilisation d'accéléromètres de compensation beaucoup moins performants sur le biais que celui placé en axe de mesure du capteur (facteur supérieur ou égal à 10), et surtout très peu coûteux.

Cela est possible lorsque le désalignement ou mésalignement est suffisamment faible (maîtrise du procédé de production), typiquement inférieur à 50 mrad pour que l'erreur projetée sur l'axe de mesure souhaité Y ne soit au premier ordre que celle des projections (sin $\alpha$ ; sin $\beta$) de l'erreur de l'accéléromètre biaxe de compensation. Par exemple, avec un désalignement de 10 mrad, la projection sur l'axe sensible n'est que 10 millièmes de l'erreur de mesure transverse.

En supposant des performances de biais identiques pour l'accéléromètre de compensation selon les axes X et Z ($\mu_{CalX} = \mu_{CalZ} = \mu_{Cal}$) le biais du capteur $K0$ , en mg est alors borné par (en valeur absolue) la relation suivante :

$$K0 \leq K0_Y + 2.\,\mu_{Cal}.K0_{Comp}$$

dans laquelle :

$K0_Y$ représente le biais du capteur selon l'axe Y, en mg ; et
$K0_{Comp}$ représente le biais du capteur selon chaque axe secondaire X, Z de compensation, en mg.

Un exemple d'application numérique suit : si on souhaite tenir un taux d'erreur de 1mg avec un accéléromètre principal (axe A) de classe 0.5mg, il faut par exemple :

- un accéléromètre secondaire de compensation selon les axes X et Z de classe 25 mg avec 10 mrad de mésalignement,
- un accéléromètre secondaire de compensation selon les axes X et Z de classe 12.5 mg avec 20 mrad de mésalignement.

Ces résultats sont particulièrement intéressants dans la mesure où l'on trouve des accéléromètres de classe 20 mg pour quelques euros, ce qui n'est pas du tout le cas pour des performances de classe 1 mg ou moins.

## Revendications

1. Ensemble capteur de mesure d'accélération, comprenant un sous-ensemble accéléromètre (40) à trois axes de mesures, monté dans un boîtier (41) muni d'éléments de fixation (42), configuré pour déterminer une accélération selon un axe de mesure OY, comprenant :

   - un accéléromètre principal (40a) mono-axe à masse sismique (1) à mouvement rectiligne selon un axe sensible principal A, insensible aux accélérations transverses, réalisant une mesure d'accélération selon l'axe sensible principal A désaligné de l'axe de mesure OY d'au maximum 50 mrad,

   l'ensemble capteur de mesure d'accélération étant **caractérisé en ce qu'**il comprend par ailleurs:

   - un accéléromètre secondaire (40b) à au moins deux axes de mesure réalisant des mesures respectivement selon deux axes X et Z formant avec l'axe de mesure Y un trièdre orthonormé direct (O, X, Y, Z), la précision de mesure de l'accéléromètre biaxe selon chacun de ses axes étant au moins dix fois moindre que la précision de mesure de l'accéléromètre principal mono-axe, et
   - une unité de calcul électronique configurée pour calculer et délivrer en sortie une accélération S compensée au moyen de la relation suivante :

$$S = S_{prA} - \mu_{CalZ} \cdot S_{secX} + \mu_{CalX} \cdot S_{secZ}$$

dans laquelle :

- $S_{prA}$ représente la mesure d'accélération selon l'axe sensible principal A ;
- $\mu_{CalX}$, $\mu_{CalZ}$ représentent les paramètres de compensation des calages respectivement d'axes X, Z de l'ensemble du capteur, adimensionnels, mesurés après l'assemblage de l'ensemble du capteur ; et
- $S_{secX}$, $S_{secZ}$ représentent l'accélération de compensation respectivement placée selon l'axe transverse X et selon l'axe transverse Z.

**2.** Ensemble capteur selon la revendication 1, dans lequel l'unité de commande électronique comprend un microcontrôleur ou un processeur de traitement numérique de signal.

**3.** Ensemble capteur selon la revendication 1, dans lequel l'unité de commande électronique comprend un circuit intégré programmable FPGA.

**4.** Ensemble capteur selon l'une des revendications précédentes, dans lequel l'accéléromètre biaxe est de classe 20 mg.

**5.** Ensemble capteur selon l'une des revendications précédentes, dans lequel l'accéléromètre principal est de la classe 1mg.

**6.** Ensemble capteur selon l'une des revendications précédentes, dans lequel l'accéléromètre biaxe est désaligné d'au maximum 50 mrad par rapport aux axes X et/ou Z.

**Patentansprüche**

**1.** Beschleunigungsmesssensoranordnung, umfassend eine Beschleunigungsmesserunteranordnung (40) mit drei Messachsen, die in einem Gehäuse (41) montiert ist, das mit Befestigungselementen (42) versehen ist, die dafür konfiguriert ist, eine Beschleunigung entlang einer Messachse OY zu bestimmen, Folgendes umfassend:

- einen einachsigen Hauptbeschleunigungsmesser (40a) mit seismischer Masse (1) mit geradliniger Bewegung entlang einer empfindlichen Hauptachse A, der gegenüber Querbeschleunigungen unempfindlich ist, der eine Beschleunigungsmessung entlang der empfindlichen Hauptachse A, die von der Messachse OY um höchstens 50 mrad versetzt ist, durchführt,

wobei die Beschleunigungsmesssensoranordnung **dadurch gekennzeichnet ist, dass** sie des Weiteren Folgendes umfasst:

- einen sekundären Beschleunigungsmesser (40b) mit mindestens zwei Messachsen, der Messungen entlang zwei Achsen X beziehungsweise Z durchführt, die mit der Messachse Y ein direktes orthonormiertes Dreibein (O, X, Y, Z) bilden, wobei die Messgenauigkeit des zweiachsigen Beschleunigungsmessers entlang jeder seiner Achsen mindestens um das Zehnfache geringer ist als die Messgenauigkeit des einachsigen Hauptbeschleunigungsmessers, und
- eine elektronische Berechnungseinheit, die dafür konfiguriert ist, eine Beschleunigung S zu berechnen und auszugeben, die mittels der folgenden Beziehung kompensiert ist:

$$S = S_{prA} - \mu_{CalZ} \cdot S_{secX} + \mu_{CalX} \cdot S_{secZ}$$

in der:

- $S_{prA}$ die Beschleunigungsmessung entlang der empfindlichen Hauptachse A darstellt;
- $\mu_{CalX}$, $\mu_{CalZ}$ die Kompensationsparameter der Einstellungen der Achsen X beziehungsweise Z der Sensoranordnung, dimensionslos, darstellen, gemessen nach dem Zusammenbauen der Sensoranordnung; und
- $S_{secX}$, $S_{secZ}$ die Kompensationsbeschleunigung, entlang der Querachse X beziehungsweise entlang der Querachse Z positioniert, darstellen.

**2.** Sensoranordnung nach Anspruch 1, wobei die elektronische Steuereinheit einen Mikrocontroller oder einen digitalen Signalverarbeitungsprozessor umfasst.

3. Sensoranordnung nach Anspruch 1, wobei die elektronische Steuereinheit eine programmierbare integrierte FPGA-Schaltung umfasst.

4. Sensoranordnung nach einem der vorhergehenden Ansprüche, wobei der zweiachsige Beschleunigungsmesser von der Klasse 20 mg ist.

5. Sensoranordnung nach einem der vorhergehenden Ansprüche, wobei der Hauptbeschleunigungsmesser von der Klasse 1 mg ist.

6. Sensoranordnung nach einem der vorhergehenden Ansprüche, wobei der zweiachsige Beschleunigungsmesser in Bezug auf die Achsen X und/oder Z um höchstens 50 mrad versetzt ist.

## Claims

1. An acceleration-measuring sensor assembly comprising an accelerometer subassembly (40) with three measurement axes, mounted in a housing (41) equipped with securing elements (42), configured to determine an acceleration along a measurement axis OY, comprising:

   - a single-axis main accelerometer (40a) with a seismic mass (1) moving in a straight line along a main sensitive axis A, insensitive to transverse accelerations, measuring acceleration along the main sensitive axis A which is misaligned with respect to the measurement axis OY by 50 mrad at most,

   the acceleration-measuring sensor assembly being **characterised in that** it also comprises:

   - a secondary accelerometer (40b) having at least two measurement axes and measuring, respectively, along two axes X and Z which form with the measurement axis Y a direct orthonormal trihedron (O, X, Y, Z), the measurement precision of the two-axis accelerometer along each of its axes being at least ten times inferior to the measurement precision of the main single-axis accelerometer, and
   - an electronic computation unit configured to compute and output an acceleration S compensated for by means of the following relation:

$$S = S_{prA} - \mu_{CalZ} \cdot S_{secX} + \mu_{CalX} \cdot S_{secZ}$$

   in which:

   - $S_{prA}$ represents the acceleration measurement along the main sensitive axis A;
   - $\mu_{CalX}$, $\mu_{CalZ}$ represent the parameters compensating respectively for the alignments of axes X, Z of the sensor assembly, these being dimensionless quantities, measured after assembly of the sensor assembly; and
   - $S_{secX}$, $S_{secZ}$ represent the compensation acceleration placed along the transverse axis X and along the transverse axis Z, respectively.

2. The sensor assembly according to claim 1, wherein the electronic control unit comprises a microcontroller or a processor for digitally processing the signal.

3. The sensor assembly according to claim 1, wherein the electronic control unit comprises an FPGA programmable integrated circuit.

4. The sensor assembly according to one of the preceding claims, wherein the two-axis accelerometer is of the 20 mg class.

5. The sensor assembly according to one of the preceding claims, wherein the principal accelerometer is of the 1 mg class.

6. The sensor assembly according to one of the preceding claims, wherein the two-axis accelerometer is misaligned from the axes X and/or Z by 50 mrad at most.

FIG.1

FIG.2

FIG.3

Y

Axe parallèle à Y

Axe parallèle à Y

42

Axe parallèle à X

Axe parallèle à Y

Boitier accélérométrique

40

A

Carte électronique

40a

Accéléromètre

41

X

O

Z

40b

Axe parallèle à X

42

FIG.4

## RÉFÉRENCES CITÉES DANS LA DESCRIPTION

**Documents brevets cités dans la description**

- EP 1570275 B1

**Littérature non-brevet citée dans la description**

- **DE FREITAS J.M. et al.** Measurement of sensor axis misalignment in fibre-optic accelerometers. *Measurement Science and Technology, IOP, Bristol, GB*, July 2006, vol. 17 (7), 1819-1825

- **HILLER T. et al.** Analysis and Compensation of Cross-Axis Sensitivity in Low-Cost MEMS Inertial Sensors. *2021 IEEE International Symposium on inertial sensors and systems*, 22 March 2021, 1-4